# EUROPEAN PATENT APPLICATION

(11) **EP 4 023 591 A1**
(43) Date of publication of application: **06.07.2022**
(21) Application number: 20859395.4
(22) Date of filing: 27.08.2020
(51) Int. Cl.: C01B 13/02, C01G 45/02, B01D 53/14, B01J 20/06, B01J 20/30

(54) **METAL OXIDE, OXYGEN ADSORPTION AND DESORPTION DEVICE, OXYGEN CONCENTRATING DEVICE, AND METHOD FOR PRODUCING METAL OXIDE**

(30) Priority: 30.08.2019 JP 2019158461
(71) Applicant: Mitsubishi Chemical Corporation, Chiyoda-ku Tokyo 100-8251 (JP); Kanagawa University, Yokohama-shi Kanagawa 221-8686 (JP)
(72) Inventor: NISHIDA, Ryo, Tokyo 100-8251 (JP); YAMAHARA, Keiji, Tokyo 100-8251 (JP); MOTOHASHI, Teruki, Yokohama-shi, Kanagawa 221-8686 (JP); SAITO, Miwa, Yokohama-shi, Kanagawa 221-8686 (JP); TAMURA, Sayaka, Yokohama-shi, Kanagawa 221-8686 (JP); ISEKI, Tomohiro, Yokohama-shi, Kanagawa 221-8686 (JP)
(74) Representative: Hoffmann Eitle
(86) International application number: PCT/JP2020/032368
(87) International publication number: WO 2021/039904

(57) **Abstract**

Provided is a metal oxide containing a brownmillerite-type manganese oxide represented by (Ca₂₋ₓAₓ)(Mn_{y}Al_{z}E_{2-y-z})_{w}O_{5+δ} (in the formula, A represents one or more alkaline earth metal elements other than Ca; E represents one or more 3d transition metal elements or earth metal elements other than Mn and Al; and x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2), wherein the metal oxide has a defect in a (020) plane of a crystal of the brownmillerite-type manganese oxide.

## Description

### TECHNICAL FIELD

The present invention relates to: a metal oxide; an oxygen adsorption and desorption device; an oxygen concentrating device; and a method of producing a metal oxide.

This application claims priority based on Japanese Patent Application No. 2019-158461 filed in Japan on August 30, 2019, the entirety of which is hereby incorporated by reference.

### BACKGROUND ART

A metal oxide represented by Ca₂AlMnO₅+_{δ} takes a socalled brownmillerite-type crystal structure of A₂B₂O₅ and is capable of adsorbing and desorbing a large amount of oxygen. This metal oxide has been studied in the fields relating to energy production and environmental protection, particularly toward application of the metal oxide to devices for concentrating oxygen gas from the atmosphere as well as oxygen gas production systems that utilize the oxygen adsorption-desorption capability. In recent years, aiming at practical use of such devices, attempts have been made to lower the temperature at which the metal oxide can adsorb and desorb oxygen so as to lower the operation temperature of oxygen gas production.

Patent Document 1 discloses a technology of partially substituting Ca with an alkaline earth metal element other than Ca and further partially substituting Mn with Al, Fe, Co, or Ga in a metal oxide represented by Ca₂AlMn0₅+₅, and thereby controlling the temperature at which the metal oxide can adsorb and desorb oxygen.

### PIOR ART DOCUMENT

### PATENT DOCUMENT

Patent Document 1: Japanese Unexamined Patent Application Publication No. 2011-121829

### SUMMARY OF THE INVENTION

### PROBLEMS TO BE SOLVED BY THE INVENTION

As described above, it has been studied to control the oxygen adsorption-desorption temperature of a metal oxide represented by Ca₂AlMnO₅+_{δ} by substitution with elements other than the constituent elements of the metal oxide. However, other means for modifying the oxygen adsorption-desorption temperature have not been investigated.

An object of the present invention is to provide a novel metal oxide whose oxygen adsorption-desorption temperature can be modified.

### MEANS FOR SOLVING THE PROBLEMS

In view of the above-described circumstances, the present inventors intensively studied to discover that a metal oxide whose oxygen adsorption-desorption temperature can be modified can be provided by incorporating a defect into the (020) plane of a crystal of a brownmillerite-type manganese oxide and/or adjusting the b-axis length of the crystal of the brownmillerite-type manganese oxide to be in a specific range, thereby completing the present invention.

That is, the gist of the present invention is as follows.
[1] A metal oxide, comprising a brownmillerite-type manganese oxide represented by the following Formula (1),
   wherein the metal oxide has a defect in a (020) plane of a crystal of the brownmillerite-type manganese oxide:

   (Ca₂-ₓAₓ) (Mn_{y}Al_{z}E₂-_{y}-_{z})_{w}O_{5+δ} (1)

   where, in the Formula (1),
   A represents one or more alkaline earth metal elements other than Ca;
   E represents one or more 3d transition metal elements or earth metal elements other than Mn and Al; and
   x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.
[2] The metal oxide according to [1], wherein in a diffraction pattern obtained by powder X-ray diffraction measurement in the state of an oxygen release phase, a peak intensity of the (020) plane is less than 23.0 when a peak intensity of a (141) plane is taken as 100.
[3] A metal oxide, comprising a brownmillerite-type manganese oxide represented by the following Formula (1),
   wherein a phase transition temperature of oxygen adsorption and desorption in an air stream is 530°C or lower:

   (Ca₂-ₓAₓ) (Mn_{y}Al_{z}E₂-_{y}-_{z})_{w}O_{5+δ} (1)

   where, in the Formula (1),
   A represents one or more alkaline earth metal elements other than Ca;
   E represents one or more 3d transition metal elements or earth metal elements other than Mn and Al; and
   x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.
[4] The metal oxide according to [3], wherein a crystal of the brownmillerite-type manganese oxide has a b-axis length of 14.500 Åto 14.920 Å.
[5] The metal oxide according to any one of [1] to [4], wherein A in the Formula (1) comprises at least Sr.
[6] A method of producing a metal oxide, the method comprising a heating step of heating a brownmillerite-type manganese oxide represented by the following Formula (1) in an atmosphere having an oxygen partial pressure of 0.1 kPa or higher and lower than 20.9 kPa:

   (Ca₂-ₓAₓ) (Mn_{y}Al_{z}E₂-_{y}-_{z})_{w}O_{5+δ} (1)

   where in the Formula (1),
   A represents one or more alkaline earth metal elements other than Ca;
   E represents one or more 3d transition metal elements or earth metal elements other than Mn and Al; and
   x, y, z, δ, and w satisfy 0 ≤ x ≤ 2, 0 < y < 2, 0 ≤ z < 2, 0 < y + z ≤ 2, 0 ≤ δ ≤ 0.5, and 0.8 ≤ w ≤ 1.2.
[7] An oxygen adsorption and desorption device, comprising the metal oxide according any one of [1] to [5] .
[8] An oxygen concentrating device, comprising the metal oxide according to any one of [1] to [5].

### ADVANTAGEOUS EFFECTS OF INVENTION

According to the present invention, a novel metal oxide whose oxygen adsorption-desorption temperature can be modified can be provided.

### BRIEF DESCRIPTION OF THE DRAWINGS

[FIG. 1] FIG. 1 shows XRD patterns of metal oxides of Examples 1 to 3 and Comparative Example 1 that were obtained by powder X-ray diffraction measurement.
[FIG. 2] FIG. 2 is a graph showing the relationship between the oxygen concentration in main firing atmosphere and the b-axis length of metal oxide in Examples 1 to 3 and Comparative Example 1.
[FIG. 3] FIG. 3 shows SEM observation images (drawing substitutes) of the metal oxides of Examples 1 to 3 and Comparative Example 1.
[FIG. 4] FIG. 4 provides graphs showing the results of thermogravimetric analysis in Examples 1 to 3 and Comparative Example 1.
[FIG. 5] FIG. 5 is a graph showing the relationship between the oxygen concentration in main firing atmosphere and the phase transition temperature in Examples 1 to 3 and Comparative Example 1.
[FIG. 6] FIG. 6 is a graph showing the relationship between the b-axis length of metal oxide crystal and the phase transition temperature in Examples 1 to 3 and Comparative Example 1.

### DESCRIPTION OF EMBODIMENTS

Embodiments of the present invention will now be described in detail; however, the following descriptions are merely examples (representative examples) of the embodiments of the present invention, and the present invention is not limited to the contents thereof within the gist of the present invention.

### <1. Metal Oxide According to First Embodiment of Present Invention>

### <1-1. Composition of Metal Oxide According to First Embodiment of Present Invention>

The metal oxide according to a first embodiment of the present invention is a metal oxide containing a brownmillerite-type manganese oxide represented by the following Formula (1), and the metal oxide has a defect in the (020) plane of a crystal of the brownmillerite-type manganese oxide:

(Ca₂-ₓAₓ) (Mn_{y}Al_{z}E₂-_{y}-_{z}) _{w}O₅+_{δ} (1)

where, in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.

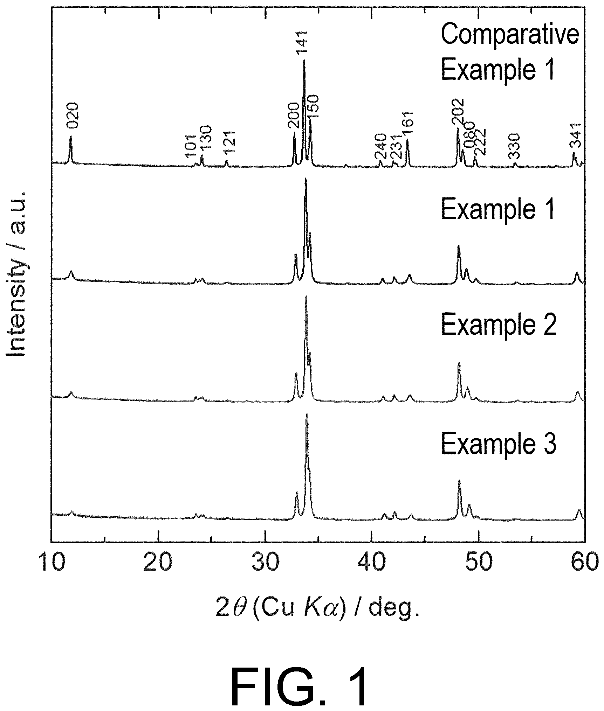

A brownmillerite-type crystal structure is a crystal structure having A₂B₂O₅ as a basic composition and has a structure shown in FIG. 1 of Japanese Unexamined Patent Application Publication No. 2011-121829 (the composition of the metal oxide shown in this FIG. 1 is Ca₂AlMnO₅+_{δ}) , in which Al and Mn form tetrahedral coordination and octahedral coordination, respectively, and are alternately laminated. In a low-temperature oxidizing atmosphere, Al tetrahedral layers absorb excess oxygen, showing an oxygen non-stoichiometry as high as 0 ≤ δ ≤ 0.5.

In the first embodiment of the present invention, A in Formula (1) is not particularly restricted as long as it is one or more alkaline earth metal elements (Group 2 elements) other than Ca, and examples thereof include Be, Mg, Sr, Ba, and Ra. Thereamong, from the standpoints of maximum oxygen adsorption amount and operation temperature, Mg, Sr, and Ba are preferred, Mg and Sr are more preferred, and Sr is particularly preferred.

In the first embodiment of the present invention, x in Formula (1) is not particularly restricted as long as it satisfies a range of 0 ≤ x ≤ 2; however, since a higher content of Ca, which is abundant as a resource, is more advantageous in terms of the cost and leads to a reduction in the mass per 1 mole of the metal oxide, x is preferably 0 ≤ x ≤ 0.5, more preferably 0 ≤ x ≤ 0.3, particularly preferably 0 ≤ x ≤ 0.2, most preferably x = 0.

When two or more elements, for example, Sr and Ba are used as A, Aₓ can be represented by Srₓ₁Baₓ₂ and used in an embodiment where x1 + x2 = x.

In the first embodiment of the present invention, E in Formula (1) is not particularly restricted as long as it is one or more 3d transition metal elements or earth metal elements other than Mn and Al. Examples of 3d transition metal elements other than Mn include Sc, Ti, V, Cr, Fe, Co, Ni, Cu, and Zn, and examples of earth metal elements other than Al include Ga, In, and Tl. Thereamong, 3d transition metal elements are preferred as E from the standpoints of the expression of oxygen adsorption-desorption property and the raw material cost. Among 3d transition metal elements, E is preferably Ti, V, Cr, Fe, Co, or Ni, more preferably Fe, Co, or Ni, particularly preferably Fe. Further, earth metal elements are preferred as E from the standpoint of lowering the oxygen adsorption-desorption temperature. Among earth metal elements, E is preferably Ga, In, or Tl, more preferably Ga. It is particularly preferred that Al in Formula (1) be substituted with Ga among the above-exemplified 3d transition metal elements and earth metal elements.

In the first embodiment of the present invention, y and z in Formula (1) are not particularly restricted as long as they satisfy ranges of 0 < y ≤ 2, 0 ≤ z < 2, and 0 < y + z ≤ 2. From the standpoints of the expression of oxygen adsorption-desorption property, y is preferably 0.25 ≤ y ≤ 1.75, more preferably 0.5 ≤ y ≤ 1.5, still more preferably 0.75 ≤ y ≤ 1.25, particularly preferably y = 1. Further, z is preferably 0.25 ≤ z ≤ 1.75, more preferably 0.5 ≤ z ≤ 1.5, still more preferably 0.75 ≤ z ≤ 1.25, particularly preferably z = 1. It is most preferred that y and z be both 1 (y = 1 and z = 1).

When two or more elements, for example, Fe and Co are used as E, E₂-_{y}-_{z} can be represented by Fe(₂-_{y}-_{z}) ₐCO (₂-_{y}-_{z})b and used in an embodiment where (2-y-z)a + (2-y-z)b = (2-y-z).

In the first embodiment of the present invention, w in Formula (1) satisfies 0.8 ≤ w ≤ 1.2. This indicates that a total molar amount of elements in the sites of Mn and Al is 1.6 or more and 2.4 or less when a total number of moles of Ca and A is 2.0, i.e. the total molar amount of elements in the sites of Mn and Al may vary within a range of about 20% from a stoichiometric composition. The oxygen adsorption-desorption property can be obtained sufficiently as long as the above-described condition of w is satisfied; however, w is preferably 0.85 ≤ w ≤ 1.15, more preferably 0.9 ≤ w ≤ 1.1.

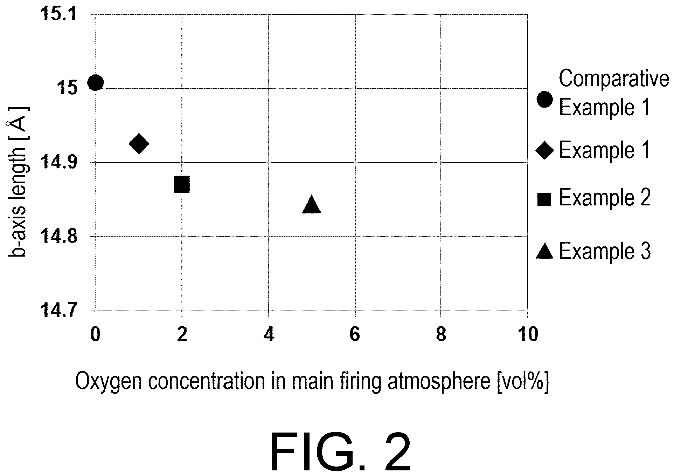

In the first embodiment of the present invention, δ in Formula (1) is not particularly restricted as long as it satisfies a range of 0 ≤ δ ≤ 0.5. A metal oxide represented by Ca₂AlMnO₅+_{δ} has the crystal structure shown in FIG. 2(a) of Japanese Unexamined Patent Application Publication No. 2011-121829 when δ = 0 (Ca₂AlMnO₅). Further, when δ = 0.5 (Ca₂AlMnO₅.₅), the crystal structure is the one shown in FIG. 2(b) of the same document.

The brownmillerite-type crystal structure contains an oxygen deficient layer that acts as a two-dimensional oxygen ion path, and it is believed that this oxygen deficient layer greatly contributes to adsorption and desorption of oxygen in a milder environment. Further, δ continuously varies within a range of 0 to 0.5 in accordance with the external environment, such as atmosphere and temperature.

It is noted here that, in the first embodiment of the present invention, A in Formula (1) substitutes the Ca site, and E substitutes the Mn site or the Al site. However, within a range that does not impair the effects of the present invention, A may substitute the Mn site or the Al site and E may substitute the Ca site, or an ion of unavoidable impurity element other than A and E may substitute the Ca site, the Mn site, or the Al site. Further, Ca, Mn and Al may substitute other sites as well.

The metal oxide according to the first embodiment of the present invention may or may not contain a dopant within a range that does not impair the effects of the present invention. Examples of the dopant include Bi, As, and Sb, which are metalloid elements belonging to the Group 15 of the periodic table. Thereamong, Bi is preferred since, as compared to As and Sb, Bi can further reduce the oxygen adsorption-desorption temperature and has less toxicity.

In the first embodiment of the present invention, the oxygen adsorption-desorption temperature can also be controlled by adjusting the content of the dopant. From the standpoint of lowering the oxygen adsorption-desorption temperature, the content of the dopant, namely a total molar amount of the dopant with respect to a total molar amount of Ca, A, Mn, Al, and E in Formula (1), is preferably 0.25% by mole or more, more preferably 0.50% by mole or more, particularly preferably 1.0% by mole or more, but preferably 25% by mole or less, more preferably 12.5% by mole or less, still more preferably 5.0% by mole or less, particularly preferably 3.0% by mole or less.

When the metal oxide is doped with Bi, it is preferable because the oxygen adsorption-desorption temperature of the metal oxide is lowered as compared to when the metal oxide is not doped.

The above-described compositions can be quantitatively determined by ICP or EDX. ICP is preferred from the standpoint of improving the accuracy of composition analysis, while EDX is preferred from the standpoint of simple determination of the composition.

The metal oxide according to the first embodiment of the present invention can be used in the fields relating to energy production and environmental protection and, for example, the metal oxide can be utilized as a catalyst for concentrating oxygen gas, a positive electrode material of a fuel cell, and the like.

### <1-2. Planar Defect>

The metal oxide according to the first embodiment of the present invention has a defect in the (020) plane of a crystal of the brownmillerite-type manganese oxide. By introducing a defect structure to a specific plane in the crystal in this manner, the phase transition temperature of the metal oxide can be controlled to be in a lower temperature range.

The term "phase transition temperature" used herein means an intermediate temperature between a 50% oxygen adsorption temperature and a 50% oxygen desorption temperature. The 50% oxygen adsorption temperature is a temperature at a point when the amount of adsorbed oxygen in the metal oxide is increased to 50% by mass, taking a maximum oxygen adsorption amount in a cooling process as 100% by mass. Meanwhile, the 50% oxygen desorption temperature is a temperature at a point when the amount of adsorbed oxygen in the metal oxide is reduced to 50% by mass, taking a maximum oxygen adsorption amount in a heating process as 100% by mass. In other words, the phase transition temperature is a temperature at which the metal oxide can effectively exhibit both adsorption and desorption of oxygen, and the phase transition temperature serves as a measure of the operation temperature at which the metal oxide can be utilized as an oxygen adsorption-desorption material. That is, an evaluation of the phase transition temperature can be reflected in the designs of an oxygen adsorption and desorption device, an oxygen concentrating device, and the like.

The first embodiment of the present invention is characterized in that a crystalline phase of the above-described metal oxide has a defect in the (020) plane. In other words, one characteristic feature of the metal oxide according to the first embodiment of the present invention is that the metal oxide has a defect in the (020) plane of the crystalline phase, in addition to being represented by the above-described Formula (1). The introduction of a defect into the crystal (020) plane can be evaluated by powder X-ray diffraction (XRD) measurement as described below. The evaluation of the planar defect is performed by heating the metal oxide in an inert atmosphere at 700°C or higher and 800°C or lower with the metal oxide being in the state of an oxygen release phase (i.e. oxygen desorption state). When a defect is introduced to the (020) plane, a reduction in the intensity of a diffraction line attributed to the (020) plane can be confirmed in a diffraction pattern obtained by the XRD measurement, in accordance with the introduction of the defect. More specifically, the introduction of the defect to the (020) plane can be verified by calculating the relative intensity ratio of a diffraction line attributed to the (020) plane with respect to a diffraction line attributed to the (141) plane having the highest peak intensity. In other words, this relative intensity ratio refers to the peak intensity of the (020) plane when the peak intensity of the (141) plane is taken as 100. When the relative intensity ratio calculated as described above is lower than 23.0, it is regarded that a defect has been introduced to the (020) plane. The lower the relative intensity ratio, the larger the amount of the defect introduced to the (020) plane. More specifically, from the standpoint of increasing the amount of the defect introduced to the (020) plane and lowering the phase transition temperature in conjunction therewith, the relative intensity ratio is preferably 15.0 or lower, more preferably 12.0 or lower, still more preferably 6.0 or lower, particularly preferably 4.0 or lower. A lower limit of the relative intensity ratio is not particularly restricted; however, it is usually higher than 0.

Meanwhile, when the relative intensity ratio is 23.0 or higher, the metal oxide is defined as a brownmillerite-type manganese oxide having no defect in the (020) plane. It is noted here that "brownmillerite-type manganese oxide having no defect in the (020) plane" mentioned in the present specification as a reference substance in various evaluations of the lattice constant, the oxygen adsorption amount, the phase transition temperature and the like of a metal oxide refers to a brownmillerite-type manganese oxide obtained by performing the heating step described below in <4. Method of Producing Metal Oxide According to First Embodiment of Present Invention> in a vacuum atmosphere or an inert atmosphere.

### <1-3. Lattice Constant>

The crystal lattice constant of the metal oxide according to the first embodiment of the present invention is not particularly restricted; however, it is preferably the same as that of the below-described metal oxide according to a second embodiment of the present invention. In other words, in a preferred embodiment of the metal oxide according to the first embodiment of the present invention, the crystal lattice constant is as described below. The lattice constant is evaluated by XRD measurement in which the metal oxide is heated in an inert atmosphere at 700°C or higher and 800°C or lower with the metal oxide being in the state of an oxygen release phase (i.e., oxygen desorption state).

The a-axis length is usually 5.400 Åor more, preferably 5.410 Åor more, but usually 5.465 Åor less, preferably 5.460 Åor less, more preferably 5.440 Åor less, still more preferably 5.435 Åor less. The a-axis length of the metal oxide according to the first embodiment of the present invention is not largely different from that of a brownmillerite-type manganese oxide having no defect in the (020) plane. More specifically, the a-axis length of the metal oxide according to the first embodiment of the present invention is usually 98.0% or more, preferably 98.5% or more, more preferably 98.9% or more, but usually 100.0% or less, preferably 99.9% or less, more preferably 99.5% or less, still more preferably 99.4% or less, with respect to the a-axis length of a brownmillerite-type manganese oxide having no defect in the (020) plane.

The b-axis length is usually 14.500 Åor more, preferably 14.750 Åor more, but usually less than 15.000 A, preferably 14.950 Åor less, more preferably 14.920 Å or less, still more preferably 14.900 Åor less, particularly preferably 14.880 Åor less, most preferably 14.850 Åor less. By controlling the b-axis length to be in this range, the phase transition temperature of the metal oxide can be lowered. Further, as indicated below in the section of Examples, the b-axis length is more likely to be affected by planar defect than the a-axis length and the c-axis length, and is reduced as the amount of introduced planar defect increases. However, the b-axis length of the metal oxide according to the first embodiment of the present invention is usually 96.6% or more, preferably 98.3% or more, but usually less than 100%, preferably 99.7% or less, more preferably 99.5% or less, still more preferably 99.4% or less, particularly preferably 99.0% or less, with respect to the b-axis length of a brownmillerite-type manganese oxide having no defect in the (020) plane, although this varies depending on the amount of introduced planar defect. It is noted here that the lattice volume is also reduced as the b-axis length is reduced due to an increase in the amount of introduced planar defect.

The c-axis length is usually 5.239 Åor more, preferably 5.240 Åor more, more preferably 5.245 Åor more, still more preferably 5.250 Åor more, but usually 5.270 Åor less, preferably 5.260 Åor less. The c-axis length of the metal oxide according to the first embodiment of the present invention is not largely different from that of a brownmillerite-type manganese oxide having no defect in the (020) plane. More specifically, the c-axis length of the metal oxide according to the first embodiment of the present invention is usually 99.0% or more, preferably 100.0% or more, more preferably 100.2% or more, but usually 101.0% or less, preferably 100.6% or less, more preferably 100.5% or less, with respect to the c-axis length of a brownmillerite-type manganese oxide having no defect in the (020) plane.

### <1-4. Average Primary Particle Size>

The average primary particle size of the metal oxide according to the first embodiment of the present invention is not particularly restricted. From the standpoint of the oxygen adsorption-desorption rate, the volume-based average primary particle size is preferably 100 µm or smaller, more preferably 10 µm or smaller, particularly preferably 5 µm or smaller. Meanwhile, it is not necessary to set a lower limit of the average primary particle size since a reduction in the particle size leads to an increase in the specific surface area and an improvement in the oxygen adsorption-desorption rate; however, from the standpoint of the ease of handling, the average primary particle size is usually 1 nm or larger.

The average primary particle size is determined by observation under a scanning electron microscope (SEM). Specifically, on an SEM image taken at a magnification of, for example, x5,000 to x100,000 at which particles are recognizable, the length of the longest section of each primary particle defined by opposing boundaries along a horizontal straight line is measured for arbitrarily selected 50 primary particles, and an average of the thus measured values is calculated, whereby the average primary particle size is determined.

### <1-5. Specific Surface Area>

The specific surface area of the metal oxide according to the first embodiment of the present invention is not particularly restricted. From the standpoint of the oxygen adsorption-desorption rate, the specific surface area is preferably 0.1 m²/g or larger, more preferably 1 m²/g or larger, particularly preferably 10 m²/g or larger. Meanwhile, it is not necessary to set an upper limit of the specific surface area since a larger specific surface area leads to an improvement in the oxygen adsorption-desorption rate; however, it is usually 200 m²/g or smaller.

The specific surface area can be determined by a BET method using, for example, TriStar II3000 manufactured by Micromeritics Instrument Corp. Specifically, after the metal oxide is vacuum-dried at 150°C for 1 hour, the specific surface area can be measured by a multi-point BET method based on nitrogen gas adsorption (at five points in a relative pressure range of 0.05 to 0.30).

### <1-6. Shape>

The metal oxide according to the first embodiment of the present invention may be granulated or formed into an appropriate shape, taking into consideration an improvement in the ease of handling as well as the strength and the gas permeability when the metal oxide is loaded to a device.

### <2. Metal Oxide According to Second Embodiment of Present Invention>

The metal oxide according to the second embodiment of the present invention is a metal oxide containing a brownmillerite-type manganese oxide, and has a phase transition temperature of 530°C or lower for oxygen adsorption and desorption in an air stream.

### <2-1. Composition of Metal Oxide According to Second Embodiment of Present Invention>

The metal oxide according to the second embodiment of the present invention is a metal oxide containing a brownmillerite-type manganese oxide represented by the following Formula (1):

(Ca₂-ₓAₓ) (Mn_{y}Al_{z}E₂-_{y}-_{z})_{w}O_{5+δ} (1)

where, in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.

With regard to the composition of the metal oxide according to the second embodiment of the present invention, i.e. the composition of the metal oxide containing a brownmillerite-type manganese oxide represented by Formula (1) above, the descriptions provided above for the metal oxide containing a brownmillerite-type manganese oxide represented by Formula (1) in the section <1-1. Composition of Metal Oxide According to First Embodiment of Present Invention> are applied.

### <2-2. Phase Transition Temperature of Metal Oxide According to Second Embodiment of Present Invention>

In the metal oxide according to the second embodiment of the present invention, the phase transition temperature for oxygen adsorption and desorption in an air stream is 530°C or lower. As the definition of this phase transition temperature, the descriptions provided above for the phase transition temperature in the section <1-2. Composition of Planar Defect> are applied.

By controlling the phase transition temperature to be 530°C or lower, not only the operation temperature of an oxygen adsorption and desorption device or oxygen concentrating device that utilizes the metal oxide can be lowered, which can contribute to a reduction of the specific energy consumption, but also the problems in the heat resistance and the durability of such device can be resolved. The phase transition temperature of the metal oxide is preferably 500°C or lower, more preferably 480°C or lower, still more preferably 450°C or lower. The phase transition temperature of the metal oxide is not particularly restricted, and it is usually about 300°C or higher.

### <2-3. Lattice Constant>

The lattice constant of a crystal of the metal oxide according to the second embodiment of the present invention is as described below. The lattice constant is evaluated by heating the metal oxide in an inert atmosphere at 700°C or higher and 800°C or lower to bring the metal oxide into the state of an oxygen release phase (i.e., oxygen desorption state), and subsequently performing XRD measurement.

The a-axis length is usually 5.400 Åor more, preferably 5.410 Åor more, but usually 5.465 Åor less, preferably 5.460 Åor less, more preferably 5.440 Åor less, still more preferably 5.435 Åor less. The a-axis length of the metal oxide according to the second embodiment of the present invention is not largely different from that of a brownmillerite-type manganese oxide having a b-axis length of 15.000 Åor more. More specifically, the a-axis length of the metal oxide according to the second embodiment of the present invention is usually 98.0% or more, preferably 98.5% or more, more preferably 98.9% or more, but usually 100.0% or less, preferably 99.9% or less, more preferably 99.5% or less, still more preferably 99.4% or less, with respect to the a-axis length of a brownmillerite-type manganese oxide having a b-axis length of 15.000 Åor more.

The b-axis length is usually 14.500 Åor more, preferably 14.750 Åor more, but usually less than 15.000 A, preferably 14.950 Åor less, more preferably 14.920 Å or less, still more preferably 14.900 Åor less, particularly preferably 14.880 Åor less, most preferably 14.850 Åor less. By controlling the b-axis length to be in this range, the phase transition temperature of the metal oxide can be lowered. The b-axis length of the metal oxide according to the second embodiment of the present invention is usually 96.6% or more, preferably 98.3% or more, but usually less than 100%, preferably 99.7% or less, more preferably 99.5% or less, still more preferably 99.4% or less, particularly preferably 99.0% or less, with respect to the b-axis length of a brownmillerite-type manganese oxide having a b-axis length of 15.000 Åor more.

The c-axis length is usually 5.239 Åor more, preferably 5.240 Åor more, more preferably 5.245 Åor more, still more preferably 5.250 Åor more, but usually 5.270 Åor less, preferably 5.260 Åor less. The c-axis length of the metal oxide according to the second embodiment of the present invention is not largely different from that of a brownmillerite-type manganese oxide having a b-axis length of 15.000 Åor more. More specifically, the c-axis length of the metal oxide according to the second embodiment of the present invention is usually 99.0% or more, preferably 100.0% or more, more preferably 100.2% or more, but usually 101.0% or less, preferably 100.6% or less, more preferably 100.5% or less, with respect to the c-axis length of a brownmillerite-type manganese oxide having a b-axis length of 15.000 Åor more.

It is noted here that "brownmillerite-type manganese oxide having a b-axis length of 15.000 Åor more" mentioned in the present specification as a reference substance in various evaluations of the lattice constant, the oxygen adsorption amount, the phase transition temperature and the like of a metal oxide refers to a brownmillerite-type manganese oxide obtained by performing the heating step described below in <5. Method of Producing Metal Oxide According to Second Embodiment of Present Invention> in a vacuum atmosphere or an inert atmosphere.

### <2-4. Other Physical Properties>

With regard to the average primary particle size, the specific surface area, and the shape of the metal oxide according to the second embodiment of the present invention, the descriptions provided above in the sections <1-4. Average Primary Particle Size>, <1-5. Specific Surface Area>, and <1-6. Shape> are applied, respectively.

### <3. Evaluation of Metal Oxide>

### <3-1. Composition Analysis of Metal Oxide>

The composition of the metal oxide according to the first or the second embodiment of the present invention can be analyzed by measuring the amount of the respective elements contained in the metal oxide by the following methods.

### <3-1-1. Analysis of Metal Elements>

A method of determining the composition of metal elements in the metal oxide according to the first or the second embodiment of the present invention (Ca₂-ₓAₓ) (Mn_{y}Al_{z}E₂-_{y}-_{z}) O_{5+δ}, namely the composition of (Ca₂-ₓAₓ) (Mn_{y}Al_{z}E₂-_{y}-_{z}) , is not particularly restricted, and the composition can be determined by, for example, inductively coupled plasma (ICP) emission spectrometry (ICP analysis). As a plasma emission spectrophotometer, for example, ICP-AES "JY46P Model" manufactured by Jobin Yvon Inc. can be used.

### <3-1-2. Analysis of Oxygen Element>

A method of determining the composition of oxygen element in the metal oxide according to the first or the second embodiment of the present invention (Ca₂ₓAₓ) (Mn_{y}Al_{z}E₂-_{y}-_{z}) O_{5+δ}, namely the composition of O_{5+δ}, is not particularly restricted, and the composition can be determined by, for example, iodometric titration.

### <3-2. Powder X-ray Diffraction Measurement>

The crystal structure, the planar defect, and the lattice constant of a crystal of the metal oxide according to the first or the second embodiment of the present invention can be evaluated by powder X-ray diffraction (XRD) measurement. A method of this measurement is not particularly restricted, and the measurement can be performed using, for example, UltimaIV Protectus (manufactured by Rigaku Corporation) under the following conditions.
Radiation source: CuK∝ λ = 1.541836 Å)
Measurement range: 2Θ = 10° to 90°
Measurement interval: 0.02°
Measurement rate: 5°/min
Voltage: 40 kV
Current: 40 mA

### <3-3. SEM Observation and SEM-EDX>

As described above, the average particle size of the metal oxide according to the first or the second embodiment of the present invention can be evaluated using an SEM.

When the metal oxide according to the first or the second embodiment of the present invention contains a substitution element or a dopant, the distribution state of the dopant in the metal oxide can be evaluated by SEM-EDX. The measurement conditions of SEM-EDX are not particularly restricted, and the measurement can be performed by, for example, mapping the contained elements using EMAX X-ACT (manufactured by Horiba Ltd.) as an apparatus at an acceleration voltage of 15 kV.

### <3-4. TG>

The oxygen adsorption amount and the phase transition temperature of the metal oxide according to the first or the second embodiment of the present invention can be measured using a thermogravimetric (TG) analyzer. The TG measurement conditions are not particularly restricted, and the measurement can be performed using TG-8120 (manufactured by Rigaku Corporation) as an apparatus by, for example, heating the metal oxide in an air stream (oxygen partial pressure of 101 kPa, flow rate of 400 ml/min) from room temperature (25°C) to 800°C at a heating rate of 5°C/min, subsequently cooling the metal oxide from 800°C to room temperature at a cooling rate of 5°C/min, and measuring the change in weight in this period.

### <4. Method of Producing Metal Oxide According to First Embodiment of Present Invention>

The metal oxide according to the first embodiment of the present invention can be produced through the heating step of heating a brownmillerite-type manganese oxide represented by the following Formula (1) in an atmosphere having an oxygen partial pressure of 0.1 kPa or higher and lower than 20.9 kPa (gauge pressure) (hereinafter, the brownmillerite-type manganese oxide prior to being subjected to the heating step may be referred to as "brownmillerite-type manganese oxide (I)"):

(Ca₂-ₓAₓ) (Mn_{y}Al_{z}E₂-_{y}-_{z})_{w}O_{5+δ} (1)

where, in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.

First, a method of producing the brownmillerite-type manganese oxide (I) will be described. The brownmillerite-type manganese oxide (I) can be produced by a known metal oxide production method. Examples of the known metal oxide production method include the method disclosed in Japanese Unexamined Patent Application Publication No. 2011-121829.

One example of the method of producing the brownmillerite-type manganese oxide (I) is described below.

As starting materials, a calcium-containing compound, an aluminum-containing compound, and a manganese-containing compound along with, as required, an A-containing compound, an E-containing compound, and a dopant element-containing compound are dissolved in pure water to prepare an aqueous nitrate solution (aqueous solution A). In addition, citric acid is dissolved in pure water to prepare an aqueous citric acid solution (aqueous solution B).

Subsequently, the aqueous solution B is added to the aqueous solution A with stirring, and the resulting mixed solution is heated to obtain a metal citrate complex as a precursor. This precursor is heated (primary pre-firing) to obtain a black powder generated by combustion of organic matters. The thus obtained black powder is pulverized and subsequently heated at a higher temperature (secondary pre-firing), whereby the brownmillerite-type manganese oxide (I) represented by Formula (I) is obtained.

When a method of dissolving raw materials in a solution is employed in the above-described manner, the above-described calcium-containing compound, aluminum-containing compound, manganese-containing compound, A-containing compound, E-containing compound, and dopant element-containing compound are each, for example, a chloride, an oxide, a nitrate, a sulfate, an oxalate, a salicylate, an acetate, a carbonate, or a hydroxide and, from the standpoint of controlling the composition of the product, these compounds are preferably nitrates, sulfates, or acetates, particularly preferably nitrates. When the above-described starting materials are these salts, by-products generated in association with the production of the metal oxide are water and a gas containing nitrogen, oxygen, chlorine, carbon, sulfur and the like; therefore, such by-products are easily removable to the outside of the system.

Next, the heating step will be described. In the heating step, the brownmillerite-type manganese oxide (I) is heated under a condition having an oxygen partial pressure of 0.1 kPa or higher and lower than 20.9 kPa (main firing), whereby a defect is introduced to the (020) plane of the brownmillerite-type manganese oxide (I). The metal oxide in which a planar defect is introduced to its crystal exhibits a lower phase transition temperature as compared to a brownmillerite-type manganese oxide having no defect in the (020) plane. For example, as described below in the section of Examples, the phase transition temperatures of metal oxides Ca₂AlMnO₅+_{δ} obtained by performing the main firing at oxygen partial pressures of 1.0 kPa, 2.0 kPa, and 5.0 kPa are lower than the phase transition temperature of a metal oxide Ca₂AlMnO₅+_{δ} obtained by performing the main firing in a vacuum condition (i.e. at an oxygen partial pressure of 0 kPa) by about 30°C, about 69°C, and about 102°C, respectively. A metal oxide having a low phase transition temperature in this manner is highly practical since not only it can reduce the energy required for adsorption and desorption of oxygen but also, when used in a general oxygen adsorption and desorption device, oxygen concentrating device or the like, such a metal oxide can adsorb and desorb oxygen at a temperature lower than a heat-resistant temperature of a column (e.g., a stainless steel tube) to which the metal oxide is loaded.

As described above, the oxygen partial pressure in the main firing is usually 0.1 kPa or higher and lower than 20.9 kPa. By setting the oxygen partial pressure in this range, planar defects are sufficiently introduced, so that the phase transition temperature can be lowered. Further, from the standpoint of inhibiting a reduction in the maximum oxygen adsorption amount, the oxygen partial pressure is preferably 10.0 kPa or lower, more preferably 5.0 kPa or lower, still more preferably 2.0 kPa or lower. From the standpoint of further lowering the phase transition temperature, the oxygen partial pressure is preferably 0.5 kPa or higher, more preferably 1.0 kPa or higher, still more preferably 2.0 kPa or higher.

Other conditions of the main firing are not particularly restricted as long as the oxygen partial pressure is in the above-described range; however, from the standpoint of reducing the amount of an impurity phase, the atmosphere in which the main firing is performed (hereinafter, may be referred to as "main firing atmosphere") is preferably an oxygen-inert gas mixed atmosphere or an oxygen-containing reduced-pressure atmosphere. With regard to the oxygen-containing reduced-pressure atmosphere, for example, when the atmosphere inside a heating furnace is a pure oxygen gas atmosphere having a total pressure of 10.0 kPa, the total pressure is equal to the oxygen partial pressure and the atmosphere has an oxygen partial pressure of 10.0 kPa. Alternatively, for example, when the pressure in a heating furnace to which the air atmosphere has been introduced is reduced to a total pressure of 10.0 kPa, the oxygen partial pressure is 2.1 kPa. When the main firing atmosphere is an oxygen-containing reduced-pressure atmosphere, a production equipment capable of firing in a reduced-pressure atmosphere is required; therefore, from the standpoints of the equipment cost and the power usage required for a pressure-reducing treatment, it is preferred to perform the main firing in an oxygen-inert gas mixed atmosphere in which oxygen and an inert gas are mixed, such that the pressure of the main firing atmosphere is approximately the atmospheric pressure. Examples of the inert gas include: nitrogen gas; and noble gases such as helium gas and argon gas, and these inert gases may be used singly, or in combination of two or more thereof. Among these inert gases, nitrogen gas is preferred.

When the main firing is performed in an oxygen-inert gas mixed atmosphere at the atmospheric pressure (100 kPa), the main firing atmosphere may be indicated in terms of oxygen concentration instead of oxygen partial pressure. In this case, the oxygen concentration in the main firing atmosphere is usually 0.1% by volume or higher and lower than 20.9% by volume and, from the standpoint of increasing the maximum oxygen adsorption amount, it is preferably 10.0% by volume or lower, more preferably 5.0% by volume or lower, still more preferably 2.0% by volume or lower. Meanwhile, from the standpoint of lowering the phase transition temperature, the oxygen concentration is preferably 0.5% by volume or higher, more preferably 1.0% by volume or higher, still more preferably 2.0% by volume or higher.

In the heating step, the firing temperature in the main firing is not particularly restricted; however, from the standpoint of reducing the amount of an impurity phase, it is preferably 800°C or higher, more preferably 850°C or higher, particularly preferably 900°C or higher. Meanwhile, from the standpoint of inhibiting a reduction in the specific surface area due to sintering associated with high-temperature firing, the firing temperature in the main firing is preferably 1,300°C or lower, more preferably 1,250°C or lower, particularly preferably 1,200°C or lower.

When the b-axis length of metal oxide according to the first embodiment of the present invention is to be in the above-described preferred range, as a method of adjusting the b-axis length, for example, the heating step described below in <5. Method of Producing Metal Oxide According to Second Embodiment of Present Invention> may be employed. This heating step is performed as main firing under the same conditions as the heating step according to the first embodiment of the present invention. Therefore, it is also possible to adjust the b-axis length to be 14.500 Åor more but less than 15.000 Åby the heating step performed for introducing a defect to the (020) plane of the crystal of the brownmillerite-type manganese oxide (I). In other words, in the present embodiment, the b-axis length can be adjusted to be in the above-described range without incorporating a separate step for adjusting the b-axis length.

### <5. Method of Producing Metal Oxide According to Second Embodiment of Present Invention>

The metal oxide according to the second embodiment of the present invention can be produced through the heating step of heating a brownmillerite-type manganese oxide represented by the following Formula (1) in an atmosphere having an oxygen partial pressure of 0.1 kPa or higher and lower than 20.9 kPa (gauge pressure) (hereinafter, the brownmillerite-type manganese oxide prior to being subjected to the heating step may be referred to as "brownmillerite-type manganese oxide (II)"):

(Ca₂-ₓAₓ) (Mn_{y}Al_{z}E₂-_{y}-_{z})_{w}O_{5+δ} (1)

where, in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.

With regard to a method of producing the brownmillerite-type manganese oxide (II), the descriptions provided above for the method of producing the brownmillerite-type manganese oxide (I) in the section <4. Method of Producing Metal Oxide According to First Embodiment of Present Invention> are applied.

The heating step will now be described. A crystal of the brownmillerite-type manganese oxide (II) has a b-axis length of 15.000 Åor more. By heating the brownmillerite-type manganese oxide (II) under a condition having an oxygen partial pressure of 0.1 kPa or higher and lower than 20.9 kPa (main firing), a brownmillerite-type manganese oxide having a phase transition temperature of 530°C or lower for oxygen adsorption and desorption in an air stream can be obtained, and a brownmillerite-type manganese oxide having a b-axis length of preferably 14.500 Åor more and 14.920 Åor less can be obtained. A metal oxide having an adjusted crystal b-axis length in this manner exhibits a lower phase transition temperature as compared to a brownmillerite-type manganese oxide having a b-axis length of 15.000 Åor more. For example, the phase transition temperatures of metal oxides Ca₂AlMnO₅+_{δ} shown below in the section of Examples are lower than the phase transition temperature of a metal oxide Ca₂AlMnO₅+_{δ} having a b-axis length of 15.008 Åby at least 30°C. A metal oxide having a low phase transition temperature in this manner is highly practical since not only it can reduce the energy required for adsorption and desorption of oxygen but also, when used in a common oxygen adsorption and desorption device, oxygen concentrating device or the like, such a metal oxide can adsorb and desorb oxygen at a temperature lower than a heat-resistant temperature of a column (e.g., a stainless steel tube) to which the metal oxide is loaded.

As described above, the oxygen partial pressure in the main firing is usually 0.1 kPa or higher and lower than 20.9 kPa. By setting the oxygen partial pressure in this range, the b-axis length of the metal oxide is controlled to be in the above-described range, so that the phase transition temperature can be lowered. Further, from the standpoint of increasing the maximum oxygen adsorption amount, the oxygen partial pressure is preferably 10.0 kPa or lower, more preferably 5.0 kPa or lower, still more preferably 2.0 kPa or lower. From the standpoint of further lowering the phase transition temperature, the oxygen partial pressure is preferably 0.5 kPa or higher, more preferably 1.0 kPa or higher, still more preferably 2.0 kPa or higher.

The oxygen partial pressure in the main firing greatly affects the b-axis length of the resulting metal oxide, and a higher oxygen partial pressure within the above-described range tends to result in a shorter b-axis length. On the other hand, the a-axis length and the c-axis length do not largely change even when the oxygen partial pressure is changed within the above-described range. Therefore, the lattice volume is also reduced with a reduction in the b-axis length caused by an increase in the oxygen partial pressure.

The conditions of the main firing, such as the oxygen concentration, the main firing atmosphere, and the firing temperature, are the same as those of the main firing described above in <4. Method of Producing Metal Oxide According to First Embodiment of Present Invention>, and preferred embodiments thereof are also the same.

### <6. Oxygen Adsorption and Desorption Device>

An oxygen adsorption and desorption device according to a third embodiment of the present invention is an oxygen adsorption and desorption device that utilizes the metal oxide according to the first or the second embodiment of the present invention.

An embodiment of the oxygen adsorption and desorption device is not particularly restricted and, for example, the oxygen adsorption and desorption device can take an embodiment of allowing the metal oxide to adsorb oxygen at a temperature of not higher than a temperature at which adsorption of oxygen occurs while allowing the metal oxide to desorb oxygen at a temperature of not lower than a temperature at which desorption of oxygen occurs. From the standpoint of the oxygen content in a product, the temperature at which the metal oxide is allowed to adsorb oxygen is preferably 300°C or higher, more preferably 350°C or higher, particularly preferably 400°C or higher, but preferably 700°C or lower, more preferably 650°C or lower, particularly preferably 600°C or lower. Further, from the standpoint of lowering the operation temperature and thereby achieving, for example, an improvement in the practicality and an increase in the device life, the temperature at which the metal oxide is allowed to desorb oxygen is preferably 580°C or lower, more preferably 550°C or lower, still more preferably 500°C or lower, particularly preferably 450°C or lower.

Further, not only an embodiment in which up-and-down temperature fluctuations are utilized as described above, but also an embodiment in which oxygen adsorption-desorption based on up-and-down fluctuations in the oxygen partial pressure is utilized by, for example, at 300°C or higher and 700°C or lower, allowing the metal oxide to adsorb oxygen in an oxygen partial pressure range of higher than 0 kPa but 100 kPa or lower while allowing the metal oxide to desorb (release) oxygen at an oxygen partial pressure of lower than 100 kPa and a pressure of lower than the oxygen partial pressure during oxygen adsorption, can be adopted. In this case, from the standpoint of the oxygen adsorption amount, the oxygen partial pressure at which oxygen is adsorbed is preferably 5 kPa or higher, more preferably 10 kPa or higher, particularly preferably 15 kPa or higher. Further, from the standpoint of the oxygen desorption amount, a difference between the oxygen partial pressure at which oxygen is desorbed and the oxygen partial pressure during oxygen adsorption is preferably as large as possible.

### <7. Oxygen Concentrating Device>

An oxygen concentrating device according to a fourth embodiment of the present invention is an oxygen concentrating device that utilizes the metal oxide according to the first or the second embodiment of the present invention.

An embodiment of the oxygen concentrating device is not particularly restricted and, for example, the oxygen concentrating device can take an embodiment of concentrating oxygen by allowing the metal oxide to adsorb oxygen at a temperature of not higher than a temperature at which adsorption of oxygen occurs while allowing the metal oxide to desorb oxygen at a temperature of not lower than a temperature at which adsorption of oxygen occurs. From the standpoint of the oxygen content in a product, the temperature at which the metal oxide is allowed to adsorb oxygen is preferably 300°C or higher, more preferably 350°C or higher, particularly preferably 400°C or higher, but preferably 700°C or lower, more preferably 650°C or lower, particularly preferably 600°C or lower. Further, from the standpoint of lowering the operation temperature and thereby achieving, for example, an improvement in the practicality and an increase in the device life, the temperature at which the metal oxide is allowed to desorb oxygen is preferably 580°C or lower, more preferably 550°C or lower, still more preferably 500°C or lower, particularly preferably 450°C or lower.

Further, not only an embodiment in which up-and-down temperature fluctuations are utilized as described above, but also an embodiment in which oxygen adsorption-desorption based on up-and-down fluctuations in the oxygen partial pressure is utilized by, for example, at 300°C or higher and 700°C or lower, allowing the metal oxide to adsorb oxygen in an oxygen partial pressure range of higher than 0 kPa but 100 kPa or lower while allowing the metal oxide to desorb (release) oxygen at an oxygen partial pressure of lower than 100 kPa and a pressure of lower than the oxygen partial pressure during oxygen adsorption, can be adopted. In this case, from the standpoint of the oxygen adsorption amount, the oxygen partial pressure at which oxygen is adsorbed is preferably 5 kPa or higher, more preferably 10 kPa or higher, particularly preferably 15 kPa or higher. Further, from the standpoint of the oxygen desorption amount, a difference between the oxygen partial pressure at which oxygen is desorbed and the oxygen partial pressure during oxygen adsorption is preferably as large as possible.

### EXAMPLES

The present invention will now be described more concretely by way of Examples and Comparative Examples; however, the present invention is not limited to the below-described Examples.

### <Example 1>

Calcium nitrate tetrahydrate, aluminum nitrate nonahydrate, and manganese (II) nitrate hexahydrate were weighed as starting materials such that a molar ratio of Ca:Al:Mn = 2:1:1 was obtained, and these starting materials were dissolved in pure water to prepare an aqueous nitrate solution (aqueous solution A). Citric acid monohydrate was weighed in an amount of not less than 1.0 times by mole of a total metal molar amount and dissolved in pure water to prepare an aqueous citric acid solution (aqueous solution B). The whole amount of the aqueous solution B was added to the aqueous solution A with stirring, and the resulting mixture was subsequently heated at a temperature of 50°C or higher to obtain a precursor in the form of a gel. The thus obtained precursor was heated at 450°C for 1 hour in the air atmosphere (primary pre-firing) to cause combustion of organic matters, whereby a black powder was obtained. The thus obtained black powder was pulverized using a mortar and a pestle, subsequently transferred to an alumina crucible, and then fired at 900°C in the air atmosphere inside a muffle furnace (secondary pre-firing).

Next, using a highly air-tight electric furnace, the resultant was heated at 1,000°C under atmospheric pressure in a mixed atmosphere composed of 1.0% by volume of oxygen and 99% by volume of nitrogen (main firing). Thereafter, the electric furnace was cooled to room temperature while maintaining the atmosphere to be nitrogen, and the resulting processed product was taken out of the electric furnace, whereby a powdery metal oxide (Ca₂AlMnO₅+_{δ}) was obtained.

### <Example 2>

A powdery metal oxide (Ca₂AlMnO₅+_{δ}) was obtained by performing the same operations as in Example 1, except that the main firing atmosphere was changed to a mixed atmosphere composed of 2.0% by volume of oxygen and 98% by volume of nitrogen.

### <Example 3>

A powdery metal oxide (Ca₂AlMnO₅+_{δ}) was obtained by performing the same operations as in Example 1, except that the main firing atmosphere was changed to a mixed atmosphere composed of 5.0% by volume of oxygen and 95% by volume of nitrogen.

### <Comparative Example 1>

A powdery metal oxide (Ca₂AlMnO₅+_{δ}) was obtained by performing the same operations as in Example 1, except that the main firing atmosphere was changed to a vacuum atmosphere.

### <Powder X-ray Diffraction Measurement>

The metal oxides obtained in Examples 1 to 3 and Comparative Example 1 were each fired at 700°C for 12 hours in a nitrogen atmosphere and thereby brought into the state of an oxygen release phase, and powder X-ray diffraction measurement was performed. The measurement was performed in a 2Θ range of 10° to 60°. The apparatus and the X-ray conditions that were used are as follows.
Apparatus: UltimaIV Protectus (manufactured by Rigaku Corporation)
Radiation source: CuK∝ (λ = 1.541836 Å)
Measurement range: 2Θ = 10° to 90°
Measurement interval: 0.02°
Measurement rate: 5°/min
Voltage: 40 kV
Current: 40 mA
Length limiting slit: 10 mm
Incident slit: 1°
Divergence slit: 1°
Scattering slit: open
Light-receiving slit: open

FIG. 1 shows the XRD patterns of the metal oxides obtained in Examples 1 to 3 and Comparative Example 1. In all of these XRD patterns, the high-intensity diffraction lines can all be attributed to the diffraction lines of the same unit lattice as that of an orthorhombic brownmillerite-type structure, and no clear impurity peak was confirmed.

Further, it was indicated by FIG. 1 that the intensity of the diffraction peak near 2Θ = 12°, which is attributed to the (020) plane, was reduced as the oxygen concentration in the main firing atmosphere was increased from 0% by volume to 5.0% by volume. More specifically, it was confirmed that, in the XRD patterns of the metal oxides obtained in Comparative Example 1, Example 1, Example 2, and Example 3, the relative intensity ratio of the diffraction line attributed to the (020) plane with respect to the diffraction line attributed to the (141) plane was 23.8, 11.8, 5.81, and 3.72, respectively. In other words, the metal oxides obtained in Examples 1 to 3 were confirmed to have a defect in the (020) plane of their crystals.

The a-axis length, the b-axis length, the c-axis length, and the lattice volume of the crystal of the respective metal oxides, which were determined by XRD measurement, are shown in Table 1. Large changes were observed particularly in the b-axis length, and it was confirmed that the b-axis length was reduced as the oxygen concentration in the main firing atmosphere was increased from 0% by volume to 5.0% by volume. Further, FIG. 2 shows the relationship between the oxygen concentration in the main firing atmosphere and the b-axis length determined by XRD measurement.

### [Table 1]

**Table 1**

| | main firing | | a-axis length (Å) | b-axis length (Å) | c-axis length (Å) | lattice volume ( Â ³) |
|---|---|---|---|---|---|---|
| | main firing atmosphere | oxygen partial pressure (kPa) | | | | |
| Comparative Example 1 | vacuum atmosphere | 0 | 5.469 | 15.008 | 5.239 | 429.98 |
| Example 1 | 0₂ 1.Ovol%-N₂ 99vol% | 1 | 5.449 | 14.926 | 5.245 | 426.62 |
| Example 2 | O₂ 2.0vol%-N₂ 98vol% | 2 | 5.438 | 14.87 | 5.246 | 424.16 |
| Example 3 | O₂ 5.0vol%-N₂ 95vol% | 5 | 5.434 | 14.845 | 5.253 | 423.71 |

### <SEM Observation>

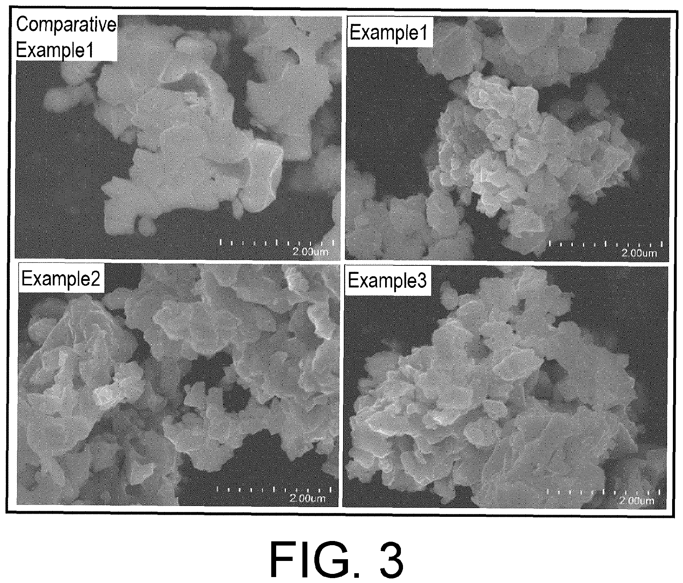

Each metal oxide obtained in Examples 1 to 3 and Comparative Example 1 was fired at 700°C for 12 hours in a nitrogen atmosphere and thereby brought into the state of an oxygen release phase, and placed on a carbon tape arranged on the sample observation stage of an SEM (SU8010, manufactured by Hitachi, Ltd.), and Au-Pt vapor deposition was performed thereon to prepare an SEM observation sample. This SEM observation sample was observed under the SEM (x10,000 magnification) at an acceleration voltage of 5 kV. FIG. 3 shows SEM observation images of the metal oxides obtained in Examples 1 to 3 and Comparative Example 1.

The particles of the metal oxides were all amorphous particles having a primary particle size of several hundred nanometers to several hundred micrometers or so, and it was confirmed that neither the particle size nor the particle form was largely affected by the firing atmosphere.

### <Measurement of Oxygen Adsorption Amount and Phase Transition Temperature by TG>

For each sample obtained in Examples 1 to 3 and Comparative Example 1, the oxygen adsorption amount and the phase transition temperature were measured using a TG analyzer (Thermoplus 2 TG-8120, manufactured by Rigaku Corporation). In this TG measurement, about 20 mg of each sample of Examples 1 to 3 and Comparative Example 1 was heated in an air stream from room temperature (25°C) to 800°C at a heating rate of 5°C/min and subsequently allowed to cool from 800°C to 25°C at a cooling rate of 5°C/min, and the change in weight in this period was measured. It is noted here that, prior to the measurement, each sample was subjected to a refresh treatment at 800°C in a nitrogen atmosphere for the purpose of removing adsorbed oxygen, water and the like, followed by evaluation of the oxygen adsorption-desorption behavior.

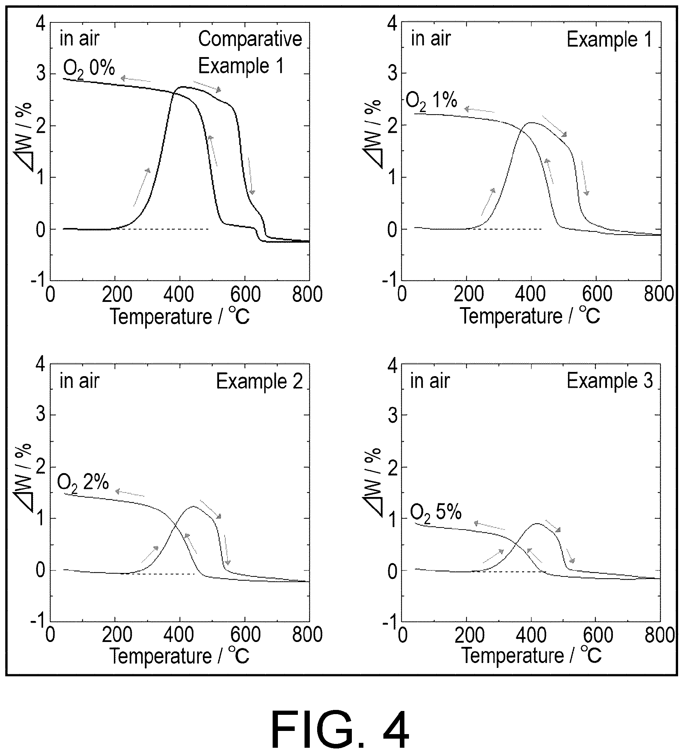

FIG. 4 shows graphs obtained by the TG measurement. For all of the samples, an increase in the weight due to adsorption of oxygen was confirmed in the heating process. On the other hand, it was confirmed that the weight was eventually reduced when heating was continued. This is because a phase transition from an oxygen adsorption phase to an oxygen release phase occurred in association with an increase in the sample temperature and the adsorbed oxygen was consequently desorbed. In the cooling process, a sharp increase in the weight was observed again from a specific temperature, and it was confirmed that oxygen adsorption occurred due to a phase transition from an oxygen release phase to an oxygen adsorption phase.

Table 2 shows the maximum oxygen adsorption amount, the 50% oxygen adsorption temperature, the 50% oxygen desorption temperature, and the intermediate temperature between the 50% oxygen adsorption temperature and the 50% oxygen desorption temperature (i.e. phase transition temperature), which were determined from the TG measurement.

### [Table 2]

**Table 2**

| | main firing | | maximum oxygen adsorption amount (wt.%) | 50% oxygen adsorption temperature (°C) | 50% oxygen desorption temperature (°C) | phase transition temperature (°C) |
|---|---|---|---|---|---|---|
| | main firing atmosphere | oxygen partial pressure (kPa) | | | | |
| Comparative Example 1 | vacuum atmosphere | 0 | 2.51 | 580.1 | 488.4 | 534.3 |
| Example 1 | 0₂1.Ovol%-N₂ 99vol% | 1 | 2.08 | 551.2 | 456.7 | 504 |
| Example 2 | O₂ 2.0vol%-N₂ 98vol% | 2 | 1.23 | 524.1 | 406.7 | 465.4 |
| Example 3 | O₂ 5.0vol%-N₂ 95vol% | 5 | 0.87 | 491.8 | 373.5 | 432.7 |

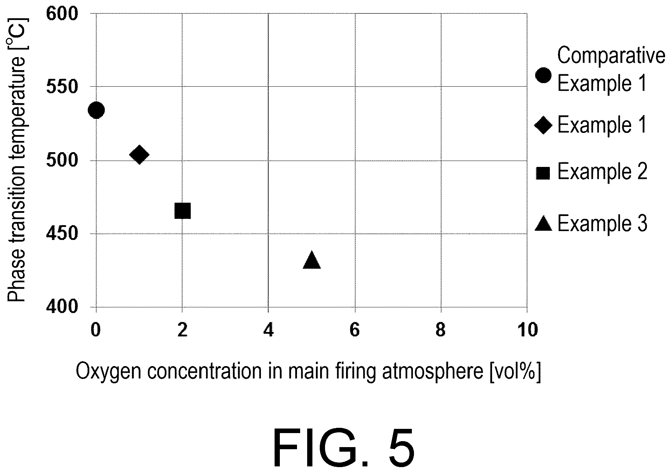

FIG. 5 shows the relationship between the oxygen concentration in the main firing atmosphere and the phase transition temperature. From FIG. 5, it was confirmed that the phase transition temperature was lowered as the oxygen concentration in the main firing atmosphere was increased from 0% by volume to 5.0% by volume.

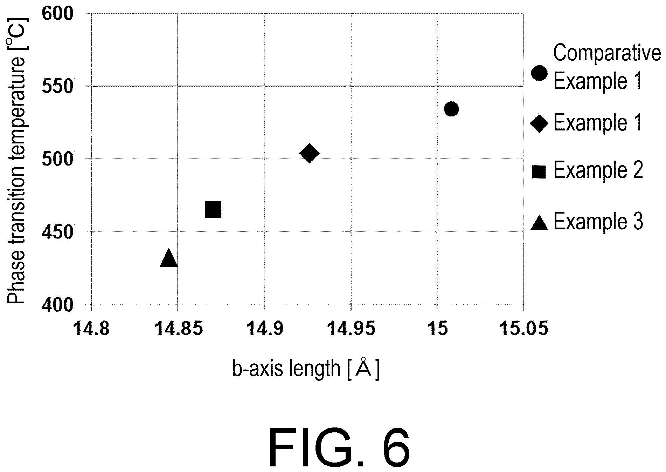

FIG. 6 shows the relationship between the b-axis length determined by the above-described XRD measurement and the phase transition temperature. As apparent from FIG. 6, it was found that the phase transition temperature has a strong correlation with the b-axis length, and that the phase transition temperature of a metal oxide can be controlled by modifying the b-axis length.

## Claims

1. A metal oxide, comprising a brownmillerite-type manganese oxide represented by the following Formula (1),
wherein the metal oxide has a defect in a (020) plane of a crystal of the brownmillerite-type manganese oxide:
(Ca₂-ₓAₓ) (Mn_{y}Al_{z}E₂-_{y}-_{z})_{w}O_{5+δ} (1)
where, in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.

2. The metal oxide according to claim 1, wherein in a diffraction pattern obtained by powder X-ray diffraction measurement in the state of an oxygen release phase, a peak intensity of the (020) plane is less than 23.0 when a peak intensity of a (141) plane is taken as 100.

3. A metal oxide, comprising a brownmillerite-type manganese oxide represented by the following Formula (1),
wherein a phase transition temperature of oxygen adsorption and desorption in an air stream is 530°C or lower:
(Ca₂-ₓAₓ) (Mn_{y}Al_{z}E₂-_{y}-_{z})_{w}O_{5+δ} (1)
where, in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y ≤ 2, 0 ≤ z < 2, 0 < y + z ≤ 2, 0 ≤ δ ≤ 0.5, and 0.8 ≤ w ≤ 1.2.

4. The metal oxide according to claim 3, wherein a crystal of the brownmillerite-type manganese oxide has a b-axis length of 14.500 Åto 14.920 Å.

5. The metal oxide according to any one of claims 1 to 4, wherein A in the Formula (1) comprises at least Sr.

6. A method of producing a metal oxide, the method comprising a heating step of heating a brownmillerite-type manganese oxide represented by the following Formula (1) in an atmosphere having an oxygen partial pressure of 0.1 kPa or higher and lower than 20.9 kPa:
(Ca₂-ₓAₓ) (Mn_{y}Al_{z}E₂-_{y}-_{z})_{w}O_{5+δ} (1)
where in the Formula (1),
A represents one or more alkaline earth metal elements other than Ca;
E represents one or more 3d transition metal elements or earth metal elements other than Mn and Al; and
x, y, z, δ, and w satisfy 0 ≤ x ≤ 2, 0 < y < 2, 0 ≤ z < 2, 0 < y + z ≤ 2, 0 ≤ δ ≤ 0.5, and 0.8 ≤ w ≤ 1.2.

7. An oxygen adsorption and desorption device, comprising the metal oxide according to any one of claims 1 to 5.

8. An oxygen concentrating device, comprising the metal oxide according to any one of claims 1 to 5.
